# EUROPEAN PATENT APPLICATION

(11) **EP 4 618 472 A1**
(43) Date of publication of application: **17.09.2025**
(21) Application number: 24192339.0
(22) Date of filing: 01.08.2024
(51) Int. Cl.: H04L 9/30

(54) **DEVICE FOR TESTING A CRYPTOGRAPHIC ALGORITHM HARDWARE**

(30) Priority: 15.03.2024 EP 24163736
(71) Applicant: NXP B.V., 5656 AG Eindhoven (NL)
(72) Inventor: Rennie, David William, 5656 AG Eindhoven (NL); Lamberger, Mario, 5656 AG Eindhoven (NL)
(74) Representative: Krott, Michel

(57) **Abstract**

There is described a device (100) for testing an electronic device (110), wherein the electronic device (110) comprises a cryptographic algorithm, and wherein the cryptographic algorithm is a repetitive cryptographic algorithm, the device (100) comprising a private key compression functionality (120), configured to compress a private key used to perform the cryptographic algorithm, and a test functionality, configured to perform or trigger the performance of the cryptographic algorithm by the electronic device (110) using the compressed private key.

## Description

### TECHNICAL FIELD

The present disclosure relates to a (test) device for testing an electronic device (e.g. a chip), wherein the electronic device comprises a repetitive cryptographic algorithm. Further, the disclosure relates to a test arrangement and a method of testing an electronic device.

### TECHNICAL BACKGROUND

A manufacturing test of electronic devices (e.g. microchips, ICs) entails exercising a high percentage of all the nodes of the circuits on the chip such that a fault on any node will manifest a test fail at which point the chip will be identified as defective by the manufacturing tester machine and be binned. Electronic devices must therefore implement a "Design For Testability" (DFT) strategy that is designed to ensure that a high percentage of all the nodes of the circuits on the chip are exercised.

Fundamentally, there are two general strategies for manufacturing of test of digital logic hardware on electronic devices (e.g. a chip): i) functional test and ii) structural test. Functional test entails configuring the chip to perform "normal" functional operations that will fail in the presence of a defect. Structural test in turn entails designing the chip to provide "scan test" which entails configuring the chip in "scan mode" which allows precalculated test vectors to be scanned into the chip's flip-flops, then clocked such that signals propagate through the combinatorial logic and are captured into flip-flops that are then scanned back out and verified against precalculated expected results. Structural test has many benefits, but it is also very costly in terms of the amount of circuitry that it entails which significantly increases the size of the area of the chip and, as a consequence, increases the manufacturing cost. Functional test does not incur this chip area cost, but it may have the disadvantages of relatively long test time and relatively low test coverage.

A high degree of test coverage is necessary in order to exercise a high percentage of all the nodes on the chip, i.e. to provide a high fault coverage. Otherwise, there is a risk of undetected "escapes" of defective chips passing through the manufacturing test process, which is highly undesirable. Hence chips must be developed to be testable, which is known as DFT. The aim of DFT of digital logic hardware is high fault coverage to reduce the number of escapes of defective chips.

One method of DFT entails performing typical functional operations that will fail in the presence of a manufacturing defect. This can also be done for an electronic device that comprises a cryptographic algorithm, e.g. by performing said cryptographic algorithm. In the following, elliptic curves (see for example US 6714648 B2 and EP 0874307 A1) are used as an illustrative example for such an algorithm.

The underlying functional operation of elliptic curve cryptography hardware entails performing a scalar multiplication operation in which each bit of the elliptic curve (private) key is processed in turn. Performing a functional scalar multiplication operation will exercise a large percentage of nodes of the elliptic curve circuits in the chip to be tested. However, an issue with this conventional operation may be seen in that it takes a relatively long manufacturing test time. This means that the cryptographic chip spends more time on the tester machine which adds considerably to the test costs which in turn adds to the manufacturing cost of the chip.

Similarly, the underlying functional operation of symmetric cryptography hardware usually consists of the repetition of round functions. Examples of such algorithms are block ciphers (e.g., AES or Triple DES), cryptographic hash functions (e.g., SHA2, SHA3), message authentication codes (e.g., CMAC, HMAC), authenticated encryption modes (e.g., CCM, GCM) and deterministic random bit generators (DRBGs), among others. Performing a functional cryptographic operation will exercise a large percentage of nodes of the symmetric cryptographic circuits in the chip, but an issue with this operation is that it may take a relatively long manufacturing test time. This means that the IC spends more time on the tester machine which can add considerably to the test costs of cryptographic hardware which in turn adds to the manufacturing cost of the chip.

### SUMMARY OF THE DISCLOSURE

There may be a need to provide a fast and reliable design for testability (DFT) for an electronic device with a cryptographic algorithm.

According to a first aspect of the present disclosure, it is described a (test) device (a design for testability) for testing (with a functional test) an electronic device (e.g. a cryptographic hardware), wherein the electronic device comprises a cryptographic algorithm, and wherein the cryptographic algorithm is a repetitive cryptographic algorithm (for example an elliptic curve cryptographic algorithm), the device comprises:
i) a private key compression functionality (e.g. a software and/or hardware, e.g. a private key compression device/circuit), configured to compress or trigger the compression (e.g. by the electronic device) of a private key used to perform the cryptographic algorithm (e.g. to only 10% of its original length), and
ii) a test functionality (e.g. a software and/or a hardware, e.g. a test device), configured to perform or trigger the performance of the cryptographic algorithm by the electronic device using the compressed private key.

The device according to the first aspect represents a solution to the problem of how to provide a fast and reliable DFT for an electronic device with a cryptographic algorithm, in particular if the cryptographic algorithm is an asymmetric cryptographic algorithm.

According to a second aspect of the present disclosure, it is described a test arrangement, comprising:
i) a device as described above, and
ii) the electronic device, coupled to the device (so that the functional test can be performed).

According to a third aspect of the present disclosure, it is described a method of testing an electronic device that comprises a cryptographic algorithm, wherein the cryptographic algorithm is a repetitive cryptographic algorithm, the method comprising:
i) providing a private key to perform the cryptographic algorithm;
ii) compressing the private key;
iii) performing the cryptographic algorithm using the compressed private key; and
iv) evaluating the electronic device based on the performance of the cryptographic algorithm using the compressed private key.

According to a fourth aspect of the present disclosure, it is described a (test) device (a design for testability) for testing (with a functional test) an electronic device (e.g., a cryptographic hardware), wherein the electronic device comprises a cryptographic algorithm, and wherein the cryptographic algorithm is a repetitive cryptographic algorithm (for example a block cipher), the device comprising:
i) cryptographic algorithm control logic (e.g., a software and/or hardware) configured to trigger the cryptographic algorithm to perform a cryptographic operation with a reduced number of rounds;
ii) a test functionality (e.g. a software and/or a hardware, e.g. a test device), configured to test the electronic device using a result of the cryptographic operation performed with the reduced number of rounds.

The device according to the fourth aspect represents an alternative solution to the problem of how to provide a fast and reliable DFT for an electronic device with a cryptographic algorithm, in particular if the cryptographic algorithm is a symmetric cryptographic algorithm.

According to a fifth aspect of the present disclosure, it is described a method of testing an electronic device that comprises a cryptographic algorithm, wherein the cryptographic algorithm is a repetitive cryptographic algorithm, the method comprising:
i) performing, by the cryptographic algorithm, a cryptographic operation with a reduced number of rounds;
ii) testing the electronic device using a result of the cryptographic operation performed with the reduced number of rounds.

In the present context, the term "repetitive cryptographic algorithm" (in other words: cryptographic algorithm having a repetitive structure implementation) may in particular refer to a cryptographic algorithm (e.g. elliptic curves, the RSA algorithm, etc.) that performs the same or a very similar procedure several times. This repetition can have various purposes, such as increasing security or adapting to the length of the data. For elliptic curve, RSA and other similarly structured cryptographic algorithms, the number of repetitive "rounds" may be directly equal to the length of the key - one round per bit of key. So, if the key size is reduced/compressed, the number of "rounds" is inherently reduced and the duration of the calculation (which should be achieved in test mode).

In accordance with the present disclosure, a fast and reliable design for testability (DFT) for an electronic device with a cryptographic algorithm can be provided, when the functionality test is done based on performing the cryptographic algorithm with a compressed private key, in case the cryptographic algorithm is an asymmetric cryptographic algorithm. Alternatively, a fast and reliable design for testability (DFT) for an electronic device with a cryptographic algorithm can be provided, when the functionality test is done based on performing the cryptographic algorithm with a reduced number of rounds, in case the cryptographic algorithm is a symmetric cryptographic algorithm.

The present disclosure may reduce the test time by compressing the private key, hence reducing the number of cryptographic cycles; thereby reducing the test time and, as a consequence, the electronic device manufacturing costs. Further, the need for a structural scan test strategy may be avoided, thus saving considerable circuit area, which in turn reduces the manufacturing cost. It follows that the disclosure may be of particular interest in the development of small low-cost chips that feature cryptographic hardware such as smartcards, secure elements, and embedded authentication chips. The same advantages may be achieved by reducing the number of rounds in case of a symmetric cryptographic algorithm.

In an example, the result generated by the cryptographic algorithm performed on the electronic device to be tested may be compared (e.g. by an evaluation device) by the device (e.g. manufacturing tester machine) against a predetermined expected result. If there is a defect in the cryptographic algorithm hardware circuitry (of the electronic device), then it may manifest a wrong result, thus detecting the defect in which case the electronic device may be marked to be binned.

During the development of the disclosure, it has been observed that a significant reduction in the size of the private key will still exercise a high percentage of the circuit nodes as required to detect manufacturing defects. This is possible because of the repetitive nature, e.g. of scalar multiplication operation which repeats for every elliptic curve key bit. Thus, even with a very small number of key bits the DFT fault coverage aim may be achievable. Therefore, the private key size may be reduced by an order of magnitude (perhaps 30x or 40x) for the purposes of DFT.

It is described an approach to reduce the size of the private key in such a way that all of the hardware circuitry (of the electronic device) used to transfer, store, and prepare the private key prior to commencing an operation (e.g. elliptic curve scalar multiplication operation) will manifest a wrong result if there is a defect present in that circuity. This is so because the disclosure entails generating a compression of the private key. Thus, if there were a defect in the key transfer, storage and preparation stage, then it would result in an erroneous compressed key thus producing a wrong result. Hence, this disclosure tests for defects through the entire path of the cryptographic operation from the input key through the electronic device hardware (e.g. coprocessor engine) right through to the output result.

The key compression mechanism may be further transparent to the host device, e.g. it simply provides input data to the electronic device under test as if performing a normal functional operation (e.g. elliptic curve scalar multiplication operation). All that is required is to set a "DFT compress enable" signal to enable the private key compression functionality, and this will result in an operation that will complete in a fraction of the time, yet still producing a deterministic result that will not be as expected if there is a manufacturing defect present in the hardware.

The aspects defined above and further aspects of the disclosure are apparent from the examples of embodiment to be described hereinafter and are explained with reference to these examples of embodiment. The disclosure will be described in more detail hereinafter with reference to examples of embodiment but to which the disclosure is not limited.

### EXEMPLARY EMBODIMENTS

According to an embodiment, the cryptographic algorithm comprises an elliptic curve algorithm. In the present document, most embodiments are described for an elliptic curve cryptographic algorithm. This algorithm may be especially suitable for applications with minimal space requirements, e.g. secure elements, smart cards, etc.

According to an embodiment, the performance of the cryptographic algorithm comprises the application of a scalar multiplication. In the case of an elliptic curve algorithm, a scalar multiplication may be generally used during performing/testing the algorithm.

According to an embodiment, the cryptographic algorithm comprises at least one of Elliptic Curve Cryptography (ECC), Rivest-Shamir-Adleman (RSA), DSA (Digital Signature Algorithm), etc. Further, the cryptographic algorithm may comprise at least one PQC standard, for example one of ML-KEM (FIPS 203), ML-DSS (FIPS 204), Stateless Hash-based Signatures (FIPS 205), Stateful Hash-based Signatures (SP 800-208). The present disclosure is not restricted to elliptic curve algorithms but may instead include all repetitive cryptographic algorithms. Hence, established and highly reliable cryptographic algorithm hardware may be efficiently tested as well.

According to an embodiment, testing comprises a functional test of the electronic device. In other words, the electronic device is tested by running a functionality, here the cryptographic algorithm. Only in case that the functionality can be performed without issues, the test can be passed.

According to an embodiment, the device may further comprise an evaluation functionality (e.g. a hardware or a software), configured to evaluate the electronic device based on the performance of the cryptographic algorithm. In another example, the evaluation functionality may not be part of the device but of a larger system, e.g. a manufacturing test machine or the test arrangement. In a basic example, the evaluation functionality may have to decide between the categories "pass" and "fail" (based on the test result). In a more sophisticated example, the evaluation functionality may be configured to further evaluate the electronic device in more detail, for example: "functioning, but not functional gate may be present". In an example, the evaluation functionality may be a part of a manufacturing tester machine. In a further example, the evaluation functionality may be implemented as a mechanism on a (micro-) chip that reads the cryptographic result, compares it against a predetermined result, and signals a pass or fail accordingly.

According to an embodiment, the device is configured to provide cryptographic algorithm input parameters to the electronic device. Thereby, the device may control the electronic device under test in an efficient manner depending on the desired application. An input parameter may be for example the starting point on the elliptic curve.

According to an embodiment, the device comprises a private key pre-processing functionality, configured to pre-process the private key. According to an embodiment, the device comprises a private key preparation functionality, configured to prepare the private key (e.g. encrypting, decrypting, masking, unmasking, etc.). Depending on the desired application, additional processing of the private key may be helpful/required.

According to an embodiment, the compression of the private key comprises a generation of a signature, in particular using LFSR (linear feedback shift register). According to an embodiment, the compression of the private key comprises a use of an error detection code. These may be just two examples of how the private key can be compressed. Yet, with one of these examples, an especially fast and reliable compression may be realized.

According to an embodiment, the compression of the private key reduces the size of the private key to 50% or less, in particular to 25% or less, more in particular to 10% or less, more in particular to 5% or less, more in particular to 3% or less (of its original size). The shorter the private key, the faster the testing of the electronic device may be, most surprisingly without (essentially) affecting the quality of the test result. In a specific example, the private key comprises 233 bits and is compressed to 8 bits.

According to an embodiment, the electronic device is at least one of a hardware, a chip, a circuit, an integrated circuit (IC), a processor, a co-processor, a secure element, a smart card, in particular an internal component/module of a secure element.

According to an embodiment, the private key is generated in the device. Thereby, generation (and compression) of the private key can be controlled directly by the test device. According to an embodiment, the private key is generated in the electronic device. In this case, also the generation of the private key may be tested during the functional test of the electronic device, yielding more test results without additional effort.

According to an exemplary embodiment, the application of elliptic curves as the cryptographic algorithm may be described as follows. The cycles of an elliptic curve cryptography scalar multiplication operation are very repetitive in nature, and several hundred cycles (depending on the size of the elliptic curve (private) key) are needed to complete a cryptographic scalar multiplication operation. Due to the structural nature of elliptic curve cryptographic circuitry to implement repetitive scalar multiplication cycles, large scale toggling of circuit nodes occurs during a normal elliptic curve cryptographic scalar multiplication functional operation. This means that it is possible to achieve an acceptable level of fault coverage within elliptic curve cryptographic hardware by applying a functional test DFT strategy. It has been ascertained through the development of this disclosure that a similar level of large scale toggling of circuit nodes is achievable with a small number of scalar multiplication cycles. Hence, an acceptable level of fault coverage can be achieved by executing an elliptic curve cryptographic scalar multiplication operation with a small elliptic curve key.

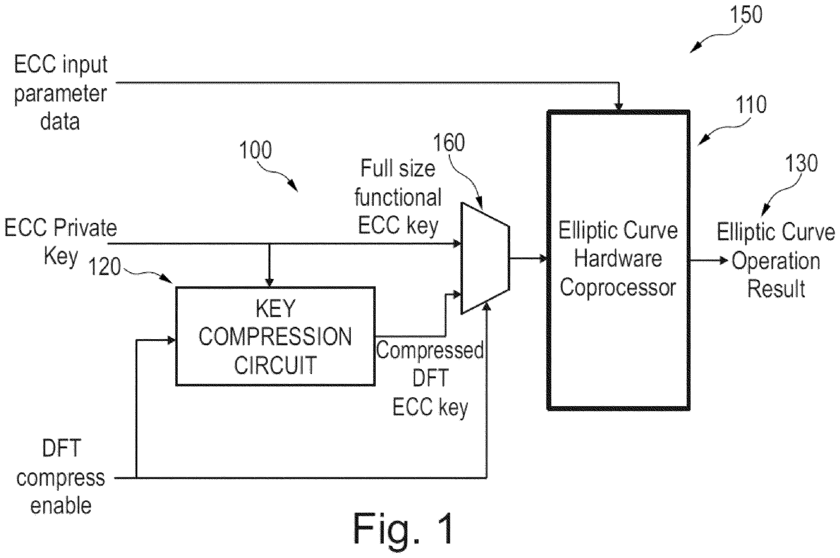

According to an exemplary embodiment, this disclosure entails configuring elliptic curve cryptographic hardware for an elliptic curve scalar multiplication in the normal functional way by providing the elliptic curve input parameters and the private key. But rather than executing the scalar multiplication with the full-size elliptic curve cryptographic key (typically several hundred bits in size), it shall first compress it down by an order of magnitude to only a small number of bits. This compressed version of the private key then becomes the private key for DFT mode, hence instead of executing all cycles of a full elliptic curve scalar multiplication algorithm, it will execute only the compressed number of cycles. As such, this will take a fraction of the time to complete the scalar multiplication operation, and yet will still produce a deterministic result at the end. Upon completion of the scalar multiplication operation with the compressed key the result can be read as normal and checked against the expected test result by the manufacturing tester machine, and if any defects exist, then the wrong result will be calculated which will be detected as a defective part. A basic representation of this scheme is depicted in Figure 1.

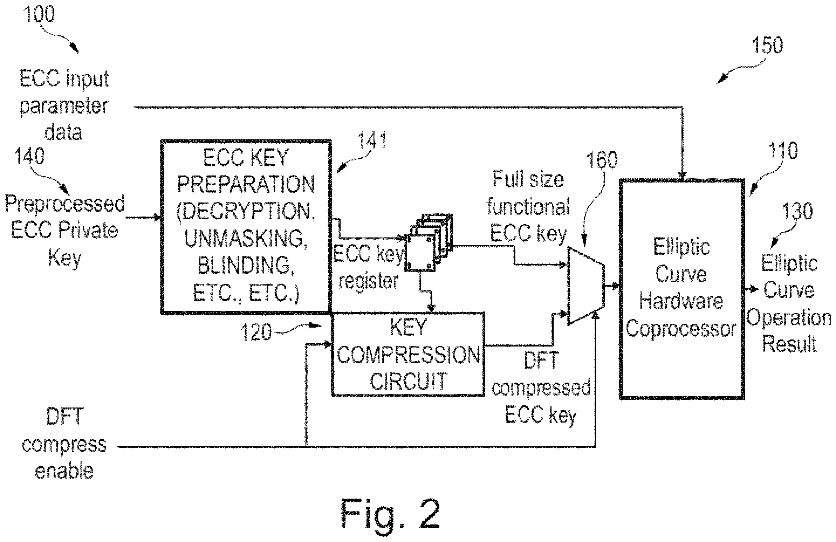

According to an exemplary embodiment, in practice, elliptic curve cryptographic hardware may include circuitry that receives and prepares the private key for a scalar multiplication. Such preparation may include a transfer bus, a key register, key decryption (if the key were encrypted), key unmasking (if the key were masked), key assembly, arithmetic key blinding, and so on. An important aspect may be seen in that it may allow defects to be detected throughout the entire elliptic curve cryptographic hardware path because any defect in the preparation circuitry will manifest an erroneous key compression value which in turn will manifest a wrong scalar multiplication result which will be detected by the tester machine. Figure 2 shows a typical scheme which has handling of the transfer, key register storage, and preparation of the private key for the scalar multiplication operation.

According to an exemplary embodiment, an important advantage of this disclosure may be seen in that it is transparent to the host chip - when in chip test mode it simply signals to the elliptic curve cryptographic hardware to enable the "key compression" mode and then a scalar calculation is performed as normal, except that the operation takes a much shorter duration which is the aim.

According to an exemplary embodiment, the present disclosure may permit the deterministic result of an elliptic curve scalar multiplication operation to be attained with a reduced private key (hence reduce number of scalar multiplication iterations) whilst attaining a reasonably high level of test coverage through the hardware logic that may be acceptable to meet the DFT targets of the chip. The scalar multiplication result can be read and compared by the chip manufacturing tester machine which concludes that the chip has a manufacturing defect if the result is not as expected. With a reduced (compressed) private key, the functional test can be completed within an order of magnitude less time than with a full private key.

According to an exemplary embodiment, a reduced private key is generated by compression of a full size elliptic curve private key into a "test" private key that may be an order of magnitude less that a full private key. This ensures that all of the hardware logic used to transfer, store and prepare the private key for the scalar multiplication operation also gets tested for manufacturing defects with reasonably high coverage that may be acceptable to meet the DFT targets of the chip.

### BRIEF DESCRIPTION OF THE DRAWINGS

Figure 1 illustrates a test arrangement with a device and an electronic device, according to an exemplary embodiment of the disclosure.
Figure 2 illustrates a test arrangement with a device and an electronic device, according to a further exemplary embodiment of the disclosure.

### DETAILED DESCRIPTION OF THE DRAWINGS

Before referring to the drawings, embodiments will be described in further detail, some basic considerations will be summarized based on which embodiments of the disclosure have been developed.

**Figure** 1 shows a test arrangement 150, comprising a device 100 for testing an electronic device 110 and the electronic device 110 itself, coupled to the device 100. The electronic device 110 is an internal component/module of an integrated circuit, for example for a secure element (of a smart card). The electronic device 110 comprises a repetitive cryptographic algorithm, in this exemplary embodiment an elliptic curve algorithm. In the embodiment shown, the device 100 is connected to the electronic device 110 via a multiplexer 160 for private key provision to perform the cryptographic algorithm. The device 100 is further configured to provide input parameter for performing the cryptographic algorithm to the electronic device 110.

The device 100 comprises a private key compression functionality 120 (here a key compression circuit), configured to compress a private key used to perform the cryptographic algorithm. It can be seen that the compressed private key can be provided via the multiplexer 160 to the electronic device 110 to be tested. Via the multiplexer 160, also the original full-size private key can be provided.

The device 100 comprises a test functionality, configured to trigger the performance of the cryptographic algorithm by the electronic device 110 using the compressed private key. Furthermore, the device 100 comprises an evaluation functionality 130 to evaluate the performance of the cryptographic algorithm, thereby performing a functional test of the electronic device 110.

**Figure 2** shows another test arrangement 150 which is comparable to the one described for Figure 1. The difference being that the test arrangement 150 of Figure 2 further comprises a key pre-processing functionality 140 and key preparation circuitry 141, coupled via a key register to the key compression device 120 and the multiplexer 160. In this manner specific operations such as encryption/decryption, masking/unmasking, arithmetic blinding, etc. may be performed with respect to the private key.

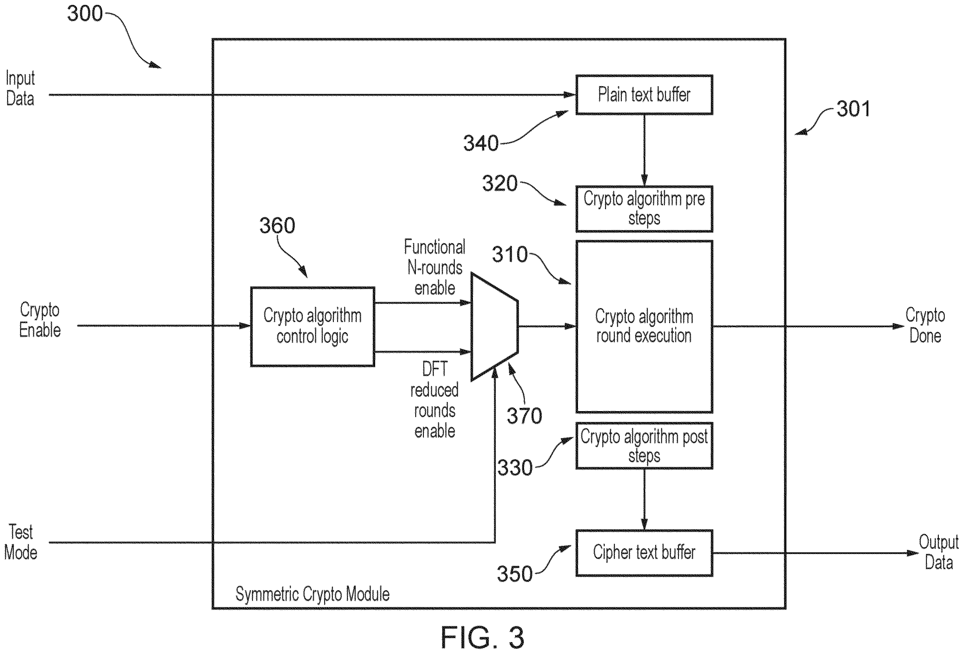

**Figure 3** shows a further test arrangement 300, which is configured to test a symmetric cryptographic algorithm 310, such as block cipher, executed by a symmetric cryptographic module 301. In particular, a cryptographic algorithm control logic 360 is configured to trigger the cryptographic algorithm 310 to perform a cryptographic operation with a reduced number of rounds, thereby effectively compressing the cryptographic algorithm 310. For this purpose, the cryptographic algorithm control logic 360 may provide a "DFT reduced rounds enable" signal to the cryptographic algorithm 310 through a multiplexer 370, which may be controlled using a "test mode" signal. If the "test mode" signal indicates that testing should be performed, the "DFT reduced rounds enable" signal" is provided to the cryptographic algorithm 310, indicating that the cryptographic algorithm 310 should reduce the number of rounds. Otherwise, the "functional N-rounds" signal is provided to the cryptographic algorithm 310, indicating that the cryptographic algorithm 310 should not reduce the number of rounds. It is noted that plain text data may be stored in a first buffer 340, and that pre-processing steps 320 may be performed on these plain text data before they are input to the cryptographic algorithm 310. Furthermore, post-processing steps 330 may be performed on the output of the cryptographic operation, and the resulting cipher text data may be stored in a second buffer 350.

It has been observed that a significant reduction of the number of iterations of the symmetric cryptographic algorithm will still exercise a high percentage of the circuit nodes as required to detect manufacturing defects. This is possible because of the repetitive nature of the symmetric cryptographic algorithm. Therefore, the number of rounds of the cryptographic algorithm can be reduced significantly for the purposes of DFT. More specifically, the functionality of a symmetric cryptographic operation is very repetitive in nature, and many clock cycles (depending on the specific algorithm) may be needed to complete a symmetric cryptographic operation. Due to the structural nature of the symmetric cryptographic circuitry to implement these repetitive structures, large-scale toggling of circuit nodes occurs during the normal execution of a symmetric cryptographic functional operation. This means that it is possible to achieve an acceptable level of fault coverage within symmetric cryptographic hardware by applying a functional test DFT strategy.

A similar level of large-scale toggling of circuit nodes is achievable with a much smaller number of cryptographic iterations. Hence, an acceptable level of fault coverage can be achieved by executing a "round-reduced" symmetric cryptographic operation. In particular, symmetric cryptography hardware may be configured in a normal functional way by providing the cryptographic input parameters and the secret key, if applicable. However, instead of executing the complete cryptographic algorithm (typically consisting of 10 to 80 or several hundreds of rounds, depending on the algorithm), the number of rounds may be reduced to a significantly smaller number. This compressed version of the algorithm may then be used for the DFT test mode. Still, round-reduced versions of a full symmetric cryptographic building block already have strong bit propagation properties. As such, this will take a fraction of the time to complete the DFT cryptographic operation, and yet will still produce a deterministic result at the end. Upon completion of the reduced cryptographic operation the result can be read as normal and checked against an expected test result by the manufacturing tester machine, and if any defects exist then the wrong result will be calculated which will be detected as a defective part. An important advantage if this DFT scheme is that it is transparent to the host chip: when in chip test mode it simply signals to the symmetric cryptographic hardware to enable the "algorithm compression" mode and then the operation is performed as normal, except that the operation takes significantly less time.

Thus, the deterministic result of a block cipher operation may be attained with a reduced number of cryptographic "rounds", whilst attaining a reasonably high level of test coverage through the hardware logic that may be acceptable to meet the DFT targets of the chip. The "reduced-rounds" block cipher result can be read and compared by the chip manufacturing tester machine which concludes that the chip has a manufacturing defect if the result is not as expected. With a reduced number of block cipher rounds for DFT, the functional test can be completed within significantly less time than with a normal number of block cipher rounds (i.e., for a normal functional mode of the cipher). More specifically, the block cipher algorithm may be executed with a reduced number of cipher rounds that may be an order of magnitude less than the number of rounds used in a normal functional mode. This means that all of the hardware logic used to transfer, store and prepare the key for the block cipher operation also gets tested for manufacturing defects with a reasonably high coverage that may be acceptable to meet the DFT targets of the chip.

## Claims

1. A device (100) for testing an electronic device (110), wherein the electronic device (110) comprises a cryptographic algorithm, and wherein the cryptographic algorithm is a repetitive cryptographic algorithm, the device (100) comprising:
a private key compression functionality (120), configured to compress or trigger the compression of a private key used to perform the cryptographic algorithm; and
a test functionality, configured to perform or trigger the performance of the cryptographic algorithm by the electronic device (110) using the compressed private key.

2. The device (100) according to claim 1,
wherein the cryptographic algorithm comprises an elliptic curve algorithm.

3. The device (100) according to claim 2,
wherein the performance of the cryptographic algorithm comprises the application of a scalar multiplication.

4. The device (100) according to claim 1,
wherein the cryptographic algorithm comprises at least one of Elliptic Curve Cryptography, ECC, Rivest-Shamir-Adleman, RSA, Digital Signature Algorithm, DSA.

5. The device (100) according to one of the preceding claims,
wherein testing comprises a functional test of the electronic device (110).

6. The device (100) according to one of the preceding claims, further comprising:
an evaluation functionality (130), configured to evaluate the electronic device (110) based on the performance of the cryptographic algorithm.

7. The device (100) according to one of the preceding claims,
wherein the device (100) is configured to provide cryptographic algorithm input parameters to the electronic device (110).

8. The device (100) according to one of the preceding claims, further comprising at least one of:
a private key pre-processing functionality (140), configured to pre-process the private key;
a private key preparation functionality (141), configured to prepare the private key.

9. The device (100) according to one of the preceding claims, comprising at least one of the following:
wherein the compression of the private key comprises a generation of a signature;
wherein the compression of the private key comprises a use of an error detection code.

10. The device (100) according to one of the preceding claims,
wherein the compression of the private key reduces the size of the private key to 25% or less.

11. A test arrangement (150), comprising:
a device (100) according to one of the preceding claims; and
the electronic device (110), coupled to the device (100).

12. The test arrangement (150) according to claim 11,
wherein the electronic device (110) is an internal component/module of a secure element; and/or wherein the private key is generated in the device (100) or in the electronic device (110).

13. A method of testing an electronic device (110) that comprises a cryptographic algorithm, wherein the cryptographic algorithm is a repetitive cryptographic algorithm, the method comprising:
providing a private key to perform the cryptographic algorithm;
compressing the private key;
performing the cryptographic algorithm using the compressed private key; and
evaluating the electronic device (110) based on the performance of the cryptographic algorithm.

14. A device (300) for testing an electronic device (301), wherein the electronic device (301) comprises a cryptographic algorithm (310), and wherein the cryptographic algorithm (310) is a repetitive cryptographic algorithm, the device (300) comprising:
cryptographic algorithm control logic (360) configured to trigger the cryptographic algorithm (310) to perform a cryptographic operation with a reduced number of rounds;
a test functionality, configured to test the electronic device (301) using a result of the cryptographic operation performed with the reduced number of rounds.

15. A method of testing an electronic device (301) that comprises a cryptographic algorithm (310), wherein the cryptographic algorithm (310) is a repetitive cryptographic algorithm, the method comprising:
performing, by the cryptographic algorithm (310), a cryptographic operation with a reduced number of rounds;
testing the electronic device (301) using a result of the cryptographic operation performed with the reduced number of rounds.

## Amended claims

### Amended claims in accordance with Rule 137(2) EPC.

1. A device (100) for testing an electronic device (110), wherein the electronic device (110) comprises a cryptographic algorithm, and wherein the cryptographic algorithm is a repetitive cryptographic algorithm, the device (100) comprising:
a private key compression functionality (120), configured to compress or trigger the compression of a private key used to perform the cryptographic algorithm; and
a test functionality, configured to perform or trigger the performance of the cryptographic algorithm by the electronic device (110) using the compressed private key.

2. The device (100) according to claim 1,
wherein the cryptographic algorithm comprises an elliptic curve algorithm.

3. The device (100) according to claim 2,
wherein the performance of the cryptographic algorithm comprises the application of a scalar multiplication.

4. The device (100) according to claim 1,
wherein the cryptographic algorithm comprises at least one of Elliptic Curve Cryptography, ECC, Rivest-Shamir-Adleman, RSA, Digital Signature Algorithm, DSA.

5. The device (100) according to one of the preceding claims,
wherein testing comprises a functional test of the electronic device (110).

6. The device (100) according to one of the preceding claims, further comprising:
an evaluation functionality (130), configured to evaluate the electronic device (110) based on the performance of the cryptographic algorithm.

7. The device (100) according to one of the preceding claims,
wherein the device (100) is configured to provide cryptographic algorithm input parameters to the electronic device (110).

8. The device (100) according to one of the preceding claims, further comprising at least one of:
a private key pre-processing functionality (140), configured to pre-process the private key;
a private key preparation functionality (141), configured to prepare the private key.

9. The device (100) according to one of the preceding claims, comprising at least one of the following:
wherein the compression of the private key comprises a generation of a signature;
wherein the compression of the private key comprises a use of an error detection code.

10. The device (100) according to one of the preceding claims,
wherein the compression of the private key reduces the size of the private key to 25% or less.

11. The device (300) according to one of the preceding claims, further comprising:
cryptographic algorithm control logic (360) configured to trigger the cryptographic algorithm (310) to perform a cryptographic operation with a reduced number of rounds;
wherein the test functionality is configured to test the electronic device (301) using a result of the cryptographic operation performed with the reduced number of rounds.

12. A test arrangement (150), comprising:
a device (100) according to one of the preceding claims; and
the electronic device (110), coupled to the device (100).

13. The test arrangement (150) according to claim 12,
wherein the electronic device (110) is an internal component/module of a secure element; and/or wherein the private key is generated in the device (100) or in the electronic device (110).

14. A method of testing an electronic device (110) that comprises a cryptographic algorithm, wherein the cryptographic algorithm is a repetitive cryptographic algorithm, the method comprising:
providing a private key to perform the cryptographic algorithm;
compressing the private key;
performing the cryptographic algorithm using the compressed private key; and
evaluating the electronic device (110) based on the performance of the cryptographic algorithm.

15. The method according to claim 14, further comprising:
performing, by the cryptographic algorithm (310), a cryptographic operation with a reduced number of rounds; and
testing the electronic device (301) using a result of the cryptographic operation performed with the reduced number of rounds.
